# EUROPEAN PATENT SPECIFICATION

(11) **EP 2 630 178 B1**
(45) Date of publication and mention of the grant of the patent: **09.12.2015**
(21) Application number: 11764649.7
(22) Date of filing: 23.09.2011
(51) Int. Cl.: C09D 163/00, C09D 167/00, C09D 167/03, C08L 33/06, C08L 67/02, C09D 5/03, C08G 59/42, C09D 133/06

(54) **LOW-BAKE POWDER COATING COMPOSITION**
BEI NIEDRIGEN TEMPERATUREN GEHÄRTETE PULVERBESCHICHTUNG
REVÊTEMENT EN POUDRE Ä BASSE TEMPÉRATURE DE RÉTICULATION

(30) Priority: 14.10.2010 EP 10306113; 14.10.2010 EP 10306112
(43) Date of publication of application: 28.08.2013
(73) Proprietor: Coatings Foreign IP Co. LLC, Wilmington, DE 19801 (US)
(72) Inventor: RODRIGUEZ-SANTAMARTA, Carlos, E-08002 Barcelona (ES); MICHAUD, Anne-Lise, F-42600 Ecotay I'Olme (FR); FUGIER, Roger, F-42600 Montbrison (FR); BUETTNER, Gabriele, 40880 Ratingen (DE); FLOSBACH, Carmen, 42287 Wuppertal (DE)
(74) Representative: Maiwald Patentanwalts GmbH
(86) International application number: PCT/US2011/052896
(87) International publication number: WO 2012/050789

(56) References cited:
- EP-A1- 1 726 621
- WO-A1-94/01505
- WO-A1-2004/041943
- WO-A2-02/055620
- US-A- 4 091 049

## Description

### Field of the Invention

The present invention is directed to a low-bake powder coating composition, particularly for outdoor application, providing high flexibility of the coatings, low baking properties, excellent flow and appearance and improved adhesion on metallic substrates.

### Description of Prior Art

Low-bake powder coating compositions, for example described in EP-A 1008163, may have low UV stability in exterior applications. Exterior powder paints are in general based on polyester resins using hardeners (curing agents, cross-linkers) selected from the group consisting of, triglycidyl isocyanurate (TGIC), alkyl amides (e.g. Primsd®) and isocyanates, providing appropriate UV stability but may show disadvantages such as toxicity and low flexibility.

Outdoor powder coating systems based on glycidyl (meth) acrylates (GMA) and dicarboxylic acids are not flexible enough to meet the high requirements of durability of architectural application. E.g., US-A 4091049, US-A 4374954 and EP-A 1726621 describe powder coating compositions which are based on glycidyl group containing acrylate resins and dicarboxylic acids/anhydrides and carboxyl functional components as hardeners, which are suitable for coating of metal substrates, by partially use of adhesion agents.

Variations of this approach are widely used, but shortcoming of this approach is that coating properties, such as impact resistance suffer.

### Summary of the Invention

The present invention provides a low-bake powder coating composition comprising
A) 10 to 60 wt% of at least one glycidyl-functionalised (meth)acrylic resin,
B) 40 to 90 wt% of at least one carboxyl functionalised polyester resin produced by reacting of at least one hydroxyl functionalised polyester resin with cyclic, aliphatic and/or aromatic dicarboxylic acids and/or their anhydrides, and
C) 0.01 to 50 wt% of at least one coating additive, pigment and/or filler,
wherein the wt% based on the total weight of the powder coating composition.

The powder coating composition of this invention provides compositions which are low-bake compositions that means, which can be cured (cross-linked, baked) at low temperature, without the use of catalysts. The composition of this invention provides coatings having high grade of flexibility for outdoor applications. Particularly and surprisingly, the powder coating composition of this invention furthermore provides no blooming of the coatings and excellent flow and appearance properties. The adhesion on metallic substrates, particularly aluminium substrates, particularly non-treated Aluminium, is improved.

### Detailed Description of the Invention

The features and advantages of the present invention will be more readily understood, by those of ordinary skill in the art, from reading the following detailed description, It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

Slight variations above and below the stated ranges specified in this application can be used to achieve substantially the same results as values within the ranges. Also, the disclosure of these ranges is intended as a continuous range including every value between the minimum and maximum values.

The powder coating compositions of this invention comprises one or more glycidyl-functionalised (meth)acrylic resins A) with quantities in the range of 10 to 60 wt%, preferred 30 to 50 wt% based on the total weight of the powder coating composition.

(Meth)acrylic is respectively intended to mean acrylic and/or methacrylic.

The glycidyl-functionalised (meth)acrylic resin A) may be produced from monomers selected from the group consisting of glycidyl monomers and co-monomers such as (meth)acrylic acid esters, hydroxyl functionalised (meth)acrylic acid esters together with styrene derivatives and/or vinyltoluene. Examples of glycidyl monomers are glycidyl (meth)acrylate, epoxycyclopentyl (meth)acrylate, (meth)allylglycidyl ether, epoxyvinylcyclohexane. Examples of co-monomers are methyl (meth)acrylate, ethyl (meth)acrylate, butyl (meth)acrylate, isobutyl (meth)acrylate, hexyl (meth)acrylate, ethylhexyl (meth)acrylate, cyclohexyl (meth)acrylate, lauryl (meth)acrylate, hydroxyethyl and hydroxypropyl (meth)acrylic acid esters, styrene, methyl styrene, butyl styrene, Veova 10 (vinylester of versatic acid), isobornyl acrylate (IBOA), isobornyl methacrylate (IBOMA). Preferred is the use of glycidyl (meth)acrylate, (meth)acrylic acid esters and styrene derivatives.

Monomers such as hexandioldi(meth)acrylate (HDDMA), allyl(meth)acrylate (AMA) and/or acrylic acid can be used to slightly crosslink the glycidyl-functionalised (meth)acrylic resin A), for example, in amounts in a range of 0 to 4 wt% based on the total weight of monomers used for the production of the glycidyl-functionalised (meth)acrylic resin A).

The glycidyl-functionalised (meth)acrylic resin A) may be produced in a conventional manner, as is, for example, described in D.A, Bates, The Science of Powder Coatings, volumes 1 & 2, Gardiner House, London, 1990, pages 62-70, for example, by free-radical solution polymerization, as known by the person skilled in the art.

Examples of suitable glycidyl-functionalised (meth)acrylic resin A) are commercial available glycidyl functionalised acrylic resins or copolymers therefrom, such as, for example, WorleeCryl®) CP 550 (Worlee Chemie GbmH), Almatex® PD 7610® and Almatex® PD 7690 (Siber Hegner GmbH), Synthacryl®710 (Cytec Surface Specialities).

The glycidyl-functionalised (meth)acrylic resins A) have an epoxide equivalent weight (EEW) in a range of 200 to 800, epoxy equivalent weight determined by means of ADSAM142, a method code of the EEW test using auto-titrator (Brinkman Metrohm 751 GPD Titrino) and known by a person skilled in the art, and a glass transition temperature Tg in a range of, e.g., 30 to 80°C, preferably 40 to 70°C, Tg determined by means of differential scanning calorimetry (DSC) according to ISO 11357-2. Preferred for this invention are glycidyl functionalised (meth)acrylic resins A) with an EEW in the range of 250 to 500.

The melting viscosity at 140°C of the glycidyl-functionalised (meth)acrylic resins A) is in the range of 10 000 to 120 000 mPas.

The melting viscosity is measured with Haake RheoStress 600, with measuring system: cone-plate (CP), gap: 0,139 mm, sensor:, HC35/4° B04010 (cone diameter: 35 cm, cone angel 4°), at140°C.

The glycidyl-functionalised (meth)acrylic resins A) may be partially replaced by further resins such as, for example, diglycidyl ethers of bisphenol and/or epoxy novolak and/or glycidylesters, for example, Araldite® PT910, in quantities in the range of 0 to 10 wt%, based on the total weight of the powder coating composition.

The powder coating composition of this invention comprises one or more specific carboxyl functionalised polyester resins B) with quantities in the range of 40 to 90 wit%, preferred 55 to 80 wt% based on the total weight of the powder coating composition.

The term specific carboxyl functionalised polyester resin B) means that carboxyl functionalised polyester resin is used based on selected components of dicarboxylic acids and/or their anhydrides and polyols.

The at least one carboxyl functionalised polyester resin may be produced particularly by reacting at least one hydroxylfunctionalised polyester with cyclic, aliphatic and/or aromatic dicarboxylic adds and/or their anhydrides. Preferably the at least one carboxyl functionalised polyester resin may be produced by reacting at least one hydroxyl functionalised polyester with cyclic, aliphatic and/or aromatic dicarboxylic acids anhydrides.

The hydroxyl functionalised polyesters may be prepared in a conventional manner as known to a person skilled in the art, as, for example, described in D.A. Bates, The Science of Powder Coatings, volumes 1 & 2, Gardiner House, London, 1990, page 30-62.

In particular, the hydroxyl functionalised polyesters may be produced by reacting dicarboxylic acids or their anhydrides with polyols in excess.

Preferred are linear or slightly branched polyesters. The term slightly branched polyesters means that the amount of tri-functional or higher polyols is in a range of 0.1 to 30 wt% based on the weight of monomers to produce the polyester.

Suitable polyols are cyclic, aromatic, aliphatic low molar mass polyols or a combination thereof defined by empirical and structural formulas, for example, ethylene glycol, the isomeric propane- and butanediols, 1,5-pentanediol, 1,6-hexanediol, 1,10-decanediol, 1,12-dodecanediol, butylethylpropanediol, neopentyl glycol (NPG), the isomeric cyclohexanediols, hydrogenated bisphenol A, isomeric cyclohexanedimethanol (CHDM), tricyclodecanedimethanol, hydroxypivalyl hydroxypivalate (HPHP), glycerol, pentaerythritol, trimethylol propane (TMP) and/or dimer fatty alcohol. Suitable polyols can have a low number-average molar mass in the range of 62 to 600. Preferred are 1,6-hexanediol, NPG, 1,3-propandiol, CHDM and/or TMP. A preferred polyol for producing the slight branching of the polyester is TMP, for example, in amounts in a range of 0.1 to 30 wt%, preferably 0.1 to 10 wt%, based on the total weight of the monomers to produce the polyester.

Suitable dicarboxylic acids are cyclic, aliphatic, aromatic compounds, or combination of those, for example, adipic acid, maleic acid, succinic acid, phthalic acid, terephthalic acid, isophthalic acid, tetrahydro phthalic acid, hexahydrophthalic acid, methyl hexahydrophthalic acid, trimellitic acid, pyromellitic acid, citric acid, cyclohexane dicarboxylic acid and/or their anhydrides. Additionally, dimeric fatty acids can be used. Preferred is the use of phthalic acid, terephthalic acid, isophthalic acid, cyclohexane dicarboxylic acid, adipic acid and/or their anhydrides.

All the number-average molar mass data stated in the present description are number-average molar masses determined or to be determined by gel permeation chromatography (GPC; divinylbenzene-crosslinked polystyrene as the stationary phase, tetrahydrofuran as the liquid phase, polystyrene standards) as defined in ISO 13885-1.

The resulting hydroxyl functionalised polyesters are further reacted with cyclic, aliphatic and/or aromatic dicarboxylic acids and/or their anhydrides to result into the carboxyl-functional polyester resin B). Examples are selected from the group consisting of hexahydrophthalic acid, methylhexahydrophthalic acid, tetrahydrophthalic acid, methyltetrahydrophthalic acid and/or succinic acid and/or the anhydrides of those acids. Preferred is the use of hexahydrophthalic acid anhydride, methylhexahydrophthalic acid anhydride and/or succinic acid anhydride.

The carboxyl-functional polyester resin B) may be produced in the presence of organic solvents, which, however, makes it necessary to isolate the polyester resin obtained in this manner or remove the solvent therefrom. Preferably, the production of the polyester resin B is, however, carried out without solvent and without subsequent purification operations.

Once the reaction carried out in the absence of solvent is complete and the reaction mixture has cooled, the solid carboxyl-functional polyester resin is obtained. The polyester does not require working up and may be used directly as component B).

The carboxyl-functional polyester resins B) have an acid value in the range of 25 to 300, preferably of 25 to 100, particularly preferably 30 to 70 mg KOH/g resin.

The acid value is defined as the number of mg of potassium hydroxide (KOH) required to neutralise the carboxylic groups of 1 g of the resin, according to DIN EN ISO 2114.

The carboxyl-functional polyester resins B) may be partially replaced by additional hardeners (cross-linkers, curing agents) useful for the curing of epoxy resins as known in the art, such as, for example, polycarboxylic acids and/or the anhydrides thereof, dicyandiamide and the derivatives thereof, in quantities in the range of 0 to 10 wt%, based on the total weight of the powder coating composition. Also, additional hardeners (cross-linkers, curing agents) can be used for the curing of polyesters as known in the art, such as, for example, hydroxylalkylamide (Primid®) and other hardeners known in the art. Preferably, no such additional hardeners are used.

The powder coating composition according to the invention comprises 0.01 to 50 wt%, preferably 0.1 to 20 wt%, based on total weight of the powder coating composition, of at least one coating additive, pigment and/or filler. These are constituents conventional in powder coating technology as known by a person skilled in the art.

Additives are, for example, degassing auxiliaries, flow-control agents, flatting agents, texturing agents, fillers (extenders), photo-initiators, catalysts, waxes, dyes. Examples are flow-control agents incorporated in the composition according to the invention via an inorganic carrier or by master-batch techniques known by a person skilled in the art. Compounds having anti-microbial activity may also be added to the powder coating compositions.

The cross-linking reaction between components A) and B) of the composition of the invention may be additionally accelerated in the powder coating composition by the presence of catalysts known from thermal cross-linking. Such catalysts are, for example, tin salts, phosphides, amines and amides. They may be used, for example, in quantities of 0 to 5 wt%, based on the total weight of the powder coating composition of the invention. Preferred is the use of no acceleration catalysts; particularly the powder coating composition of this invention can be cured (cross-linked, baked) at low temperature without the use of catalysts.

The powder coating composition of this invention may contain transparent, color-imparting and/or special effect-imparting pigments and/or fillers (extenders). Suitable color-imparting pigments are any conventional coating pigments of an organic or inorganic nature. Examples of inorganic or organic color-imparting pigments are titanium dioxide, micronized titanium dioxide, carbon black, azo pigments, and phthalocyanine pigments. Examples of special effect-imparting pigments are metal pigments, for example, made from aluminium, copper or other metals, interference pigments, such as, metal oxide coated metal pigments and coated mica. Examples of usable extenders are silicon dioxide, aluminium silicate, barium sulfate, and calcium carbonate.

The powder coating composition according to this invention may be prepared by conventional manufacturing techniques used in the powder coating industry, such as, extrusion and/or grinding processes, known by a person skilled in the art.

For example, the ingredients can be blended together by dryblending methods and can be heated to a temperature to melt the mixture, and then the mixture is extruded. The extruded material is then cooled on chill roles, broken up and ground to a fine powder, which can be classified to the desired grain size, for example, to an average particle size of 20 to 200 µm.

The composition according to the invention may also be prepared by spraying from supercritical solutions, NAD "non-aqueous dispersion" processes or ultrasonic standing wave atomization process.

Furthermore, specific components of the powder coating composition according to the invention, for example, additives, pigment, filters, may be processed with the finished powder coating particles after extrusion and grinding by a "bonding" process using an impact fusion. For this purpose, the specific components may be mixed with the powder coating particles. During blending, the individual powder coating particles are treated to soften their surface so that the components adhere to them and the components are homogeneously bonded with the surface of the powder coating particles. The softening of the powder particles' surface may be done by heat treating the particles to a temperature, e.g., the glass transition temperature Tg of the composition, in a range, of e.g., 40 to 60°C, After cooling the mixture the desired particle size of the resulted particles may be proceed by a sieving process.

The powder coating composition of this invention may be applied by, e.g., electrostatic spraying with CORONA powder gun or TRIBO gun, thermal or flame spraying, or fluidized bed coating methods, also coil coating techniques, all of which are known to those skilled in the art.

The coating composition may be applied to, e.g., metallic substrates, preferably aluminium substrates, furthermore to non-metallic substrates, such as, paper, wood, plastics, glass and ceramics, as a one-coating system or as coating layer in a multi-layer film build.

In certain applications, the substrate to be coated may be preheated before the application of the powder composition, and then either heated after the application of the powder or not. For example, gas is commonly used for various heating steps, but other methods, e.g., microwaves, IR or NIR are also known.

The powder coating compositions according to the invention can be applied directly on the substrate surface or on a layer of a primer which can be a liquid or a powder based primer. The powder coating compositions according to the invention can also be applied as a coating layer of a multilayer coating system based on liquid or powder coats, for example, based on a powder or liquid clear coat layer applied onto a color-imparting and/or special effect-imparting base coat layer or a pigmented one-layer powder or liquid top coat applied onto a prior coating.

The applied and melted powder coating layer can be cured by thermal energy under low baking conditions. The coating layer may, for example, be exposed by convective, gas and/or radiant heating, e.g., infra red (IR) and/or near infra red (NIR) irradiation, as known in the art, to temperatures of, e.g., 100°C to 300°C, preferably 100°C to 200°C, most preferably 120°C to 150°C (object temperature in each case).

The present invention is further defined in the following Examples. It should be understood that these Examples are given by way of illustration only.

### Example 1

### Example 1

### Preparation of carboxyl functionalised Polyester Resin B) of the Invention

### Step 1: Preparation of hydroxyl functional polyester

A mixture of 1844 g of hexatidiol (46.1 wt%) and 2156 g of terephthalic acid (53.9 wt%) was placed in equipment suitable for polyester synthesis (four neck round bottom flask equipped with a stirrer, a distillation column, thermometer and an inlet for nitrogen). The mixture was heated up to 240°C while stirring under nitrogen. Water distilled from the reactor at 180°C. When the distillation under atmospheric pressure stopped, a vacuum of 200 hPas was applied. Esterification was considered to be finished when an acid value of < 5 mg KOH/g was obtained. The obtained hydroxyl functional polyester had a hydroxyl value of 60 to 80 mg KOH/g.

### Step 2: Preparation of carboxyl functional polyester

4000 g of the hydroxyl functional polyester resulted from Step 1 was placed in a round bottom flask equipped with a stirrer and thermometer. The hydroxyl functional polyester was heated up to 130"C till the hydroxyl functional polyester melted. 720 g of hexahydrophthalic acid anhydride was added in portions to the reactor. After the whole amount of hexahydrophthalic acid anhydride was added to the reactor, the temperature was held at 135°C for two hours. The obtained carboxyl functional polyester had an acid value of 60 mg KOH/g.

### Example 2

### Manufacture of Powder Coating Compositions and Application

Powder coating compositions of the invention (Formulation 1, 3) and powder coating compositions of prior art (Comparative Formulation 2, 4, 5) were prepared according to the ingredients in Table 1 and 2:

**Table 1:**

| **Formulation 1 (brown paint)** | **wt%** | **Comparative Formulation 2 (brown paint)** | **wt%** |
|---|---|---|---|
| glycidyl-functionalised acrylic resin based on glycidyl methacrylate, methyl acrylate and styrene Tg; 60°C, EEW: 315 | 24.9 | glycidyl-functionalised acrylic resin based on glycidyl methacrylate, methyl acrylate and styrene Tg: 60°C, EEW: 315 | 13.3 |
| carboxyl functionalised polyester resin of | 46.1 | carboxyl functionalised polyester resin | 57.8 |

| Example acid value: 60 | | Albester® 5250 (Hexion) acid value: 24-28 | |
|---|---|---|---|
| Benzoin | 0.2 | Benzoin | 0.2 |
| Pigment / Filler | 24.8 | Pigment / Filler | 24.8 |
| Additives | 4.0 | Additives | 3.8 |

**Table 2:**

| **Formulation 3 (grey paint)** | **wt%** | **Comparative Formulation 4 (grey paint)** | **wt**% | **Comparative Formulation 5 (grey paint)** | **wt%** |
|---|---|---|---|---|---|
| glycidyl-functionalised acrylic resin based on glycidyl methacrylate, methyl acrylate and styrene Tg: 60°C, EEW; 315 | 28.7 | glycidyl-functionalised acrylic resin based on glycidyl methacrylate, methyl acrylate and styrene Tg: 60°C, EEW: 315 | 16,7 | glycidyl-functionalised acrylic resin Synthacryl® AO12289 (Cytec) Tg: 45°C EEW: 250 | 7.9 |
| carboxyl functionalised polyester resin of Example 1 acid value: 60 | 60.8 | carboxyl functionalised polyester resin Albester® 5250 acid value:24-28 | 72.8 | carboxyl functionalised polyester resin Crylcoat E38095 (Cytec) acid value: 29 | 81.5 |
| Benzoin | 0.5 | Benzoin | 0.5 | Benzoin | 0.5 |
| Pigment / Filler | 9.0 | Pigrtient / Filter | 9.0 | Pigment / Filler | 9.0 |
| Additives | 1.0 | Additives | 1.0 | Additives | 1.0 |

The ingredients of each formulation were mixed and extruded in an extruder PLK 46 (firm: Buss AG) at 80°C. Each melt-mixed formulation was cooled and the resulted material ground to a D50 value of 40 µm particle size distribution.

The final powder coating composition of each formulation was applied to a metal sheet by electrostatic spraying to a dry film thickness of 80 µm. Finally the coating was cured (baked) in a convection oven at a baking temperature of 140°C for 10 to 15 minutes.

### Example 3

### Testing of the Coatings

The test results shows highly improved effects regarding appearance, flexibiliy and blooming of the coatings based on the low-bake powder coating compositions of the invention, see Table 3 and 4.

**Table 3:**

| | **Formulation 1 (brown paint)** | **Comparative Formulation** 2 **(brown paint)** |
|---|---|---|
| Baking temperature | 140°C, 10 min | 140°C, 10 min |
| Wave scan* (Appearance) | T=12.7, L=23.3 = O.K | T=5.7, L=64.4 = n. O.K. |
| Gloss at 60° DIN EN ISO 2813-1994 | 62% | 94% |
| Reverse Impact Test** (Flexi.) EN ISO 6272-1-2004 | 5 = O.K. | 4 = n. O.K. |
| Cupping test DIN ISO 1520-2001 | O.K. | O.K. |
| Bending test DIN ISO 1519-2002 | O.K. | O.K. |
| Adhesion DIN EN ISO 2409-1994 | GT=0 = O.K. | GT=0 = O.K. |
| Blooding*** | no | yes |

| | | |
|---|---|---|
| *Wave scan: T is Tension (flow), calculated from L, and can have a value between 1 and 24. Higher value of T means a better flow. L refers to Longwaves and can have a value between 0 and 99.9. Higher value of L means lower quality. "Reverse Impact Test: 5= no crack. 4= 1-2 cracks, 3= several cracks, 4= surface is broken, but adheres, 1= surface is broken, no adhesion ***Biooming is formation of cyclic oligoesters and their migration to the surface. Blooming causes a whitey, gloomy appearance as known by a person skilled in the art. | | |

**Table 4:**

| | **Formulation 3 (grey paint)** | **Comparative Formulation 4 (grey paint)** | **Comparative Formulation 5 (grey paint)** |
|---|---|---|---|
| Baking temperature | 140°C, 15 min | 140°C, 15 min | 140°C, 15 min |
| Wave scan* (Appearance) | T=11, L=30 = O.K. | T=5.6, L=64.7 = n. O.K. | T=7.7. L=50.6 = n. O.K. |
| Gloss at 60° DIN EN ISO 2813-1994 | 88 | 89 | 95 |
| Reverse Impact Test** (Flexi.) EN ISO 6272-1-2004 | 5 = O.K. | 3+ = n. O.K | 3+ = n. O.K |
| Adhesion DIN EN ISO 2409-1994 | GT=0 = O.K. | GT=0 = O.K. | GT=0/O.K. |
| Blooming*** | no | no | yes |

| | | | |
|---|---|---|---|
| *, **, *** see above | | | |

## Claims

1. A powder coating composition comprising
A) 10 to 60 wt% of at least one glycidyl-functionalised (meth)acrylic resin,
B) 40 to 90 wt% of at least one carboxyl functionalised polyester resin produced by reacting of at least one hydroxyl functionalised polyester resin with cyclic, aliphatic and/or aromatic dicarboxylic acids and/or their anhydrides,
wherein the cyclic, aliphatic and/or aromatic dicarboxylic acids and/or their anhydrides reacting with the at least one hydroxyl functionalised polyester resin for component B) are the anhydrides of hexahydrophthalic acid, methylhexahydrophthalic acid, tetrahydrophthalic acid, methyltetrahydrophthalic acid and/or succinic acid,
and
C) 0.01 to 50 wt% of at least one coating additive, pigment and/or filler,
wherein the wt% based on the total weight of the powder coating composition.

2. The composition of claim 1 wherein the glycidyl-functionalised (meth)acrylic resin A) is produced from glycidyl (meth)acrylate, (meth)acrylic acid esters and styrene derivatives.

3. The composition of claim 1 and 2 wherein the glycidyl-functionalised (meth)acrylic resin A) has an epoxide equivalent weight (EEW) in a range of 250 to 500 and a melting viscosity at 140°C in a range of 10 000 to 120 000 mPas.

4. The composition of claims 1 to 3 wherein the hydroxyl functionalised polyester resin for component B) is produced by reacting dicarboxylic acids and/or their anhydrides with polyols in excess.

5. The composition of claim 4 wherein the polyols are 1,6-hexanediol, neopentyl glycol (NPG), 1 ,3-propandiol, isomeric cyclohexanedimethanol (CHDM) and/or trimethylol propane (TMP).

6. The composition of claim 4 wherein the dicarboxylic acids or their anhydrides are phthalic acid, terephthalic acid, isophthalic acid, cyclohexane dicarboxylic acid, adipic acid and/or their anhydrides.

7. A process for the preparation of the powder coating composition of claims 1 to 6 wherein the carboxyl functionalised polyester resin B) is produced by reacting of at least one hydroxyl functionalised polyester resin with cyclic, aliphatic and/or aromatic dicarboxylic acid anhydrides.

8. A method for coating a substrate by applying a powder coating composition according to claims 1 to 6 on the substrate and curing the applied powder coating composition by thermal energy exposing to temperatures of 120 to 150°C.

9. A substrate coated with a powder coating composition of claims 1 to 6.

## Patentansprüche

1. Pulverlackzusammensetzung umfassend
A) 10 bis 60 Gew.-% mindestens eines glycidylfunktionalisierten (Meth)acrylharzes,
B) 40 bis 90 Gew.-% mindestens eines carboxylfunktionalisierten Polyesterharzes, das durch Reagieren mindestens eines hydroxylfunktionalisierten Polyesterharzes mit cyclischen, aliphatischen und/oder aromatischen Dicarbonsäuren und/oder ihren Anhydriden hergestellt wird,
wobei die cyclischen, aliphatischen und/oder aromatischen Dicarbonsäuren und/oder ihre Anhydride, die mit dem mindestens einen hydroxylfunktionalisierten Polyesterharz für die Komponente B) reagieren, Anhydride von Hexahydrophthalsäure, Methylhexahydrophthalsäure, Tetrahydrophthalsäure, Methyltetrahydrophthalsäure und/oder Bernsteinsäure sind,
und
C) 0,01 bis 50 Gew.-% mindestens eines Beschichtungszusatzmittels, Pigments und/oder Füllstoffs,
wobei die Gew.-% auf dem Gesamtgewicht der Pulverlackzusammensetzung basieren.

2. Zusammensetzung nach Anspruch 1, wobei das glycidylfunktionalisierte (Meth)acrylharz A) aus Glycidyl(meth)acrylat, (Meth)acrylsäureestern und Styrolderivaten hergestellt wird.

3. Zusammensetzung nach Anspruch 1 und 2, wobei das glycidylfunktionalisierte (Meth)acrylharz A) ein Epoxidäquivalenzgewicht (EÄW) in einem Bereich von 250 bis 500 und eine Schmelzviskosität bei 140 °C in einem Bereich von 10 000 bis 120 000 mPas aufweist.

4. Zusammensetzung nach den Ansprüchen 1 bis 3, wobei das hydroxylfunktionalisierte Polyesterharz für die Komponente B) durch Reagieren von Dicarbonsäuren und/oder ihren Anhydriden mit Polyolen im Überschuss hergestellt wird.

5. Zusammensetzung nach Anspruch 4, wobei die Polyole 1,6-Hexandiol, Neopentylglycol (NPG), 1,3-Propandiol, isomeres Cyclohexandimethanol (CHDM) und/oder Trimethylolpropan (TMP) sind.

6. Zusammensetzung nach Anspruch 4, wobei die Dicarbonsäuren oder ihre Anhydride Phthalsäure, Terephthalsäure, Isophthalsäure, Cyclohexandicarbonsäure, Adipinsäure und/oder ihre Anhydride sind.

7. Verfahren für die Herstellung der Pulverlackzusammensetzung nach den Ansprüchen 1 bis 6, wobei das carboxylfunktionalisierte Polyesterharz B) durch Reagieren mindestens eines hydroxylfunktionalisierten Polyesterharzes mit cyclischen, aliphatischen und/oder aromatischen Dicarbonsäureanhydriden hergestellt wird.

8. Verfahren zum Beschichten eines Substrats durch Aufbringen einer Pulverlackzusammensetzung nach den Ansprüchen 1 bis 6 auf das Substrat und Aushärten der aufgebrachten Pulverlackzusammensetzung durch Wärmeenergieaussetzen Temperaturen von 120 bis 150 °C gegenüber.

9. Substrat, das mit einer Pulverlackzusammensetzung nach den Ansprüchen 1 bis 6 beschichtet ist.

## Revendications

1. Composition de revêtement en poudre comprenant
A) de 10 à 60 % en poids d'au moins une résine (méth)acrylique fonctionnalisée par un groupe glycidyle,
B) de 40 à 90 % en poids d'au moins une résine de polyester fonctionnalisée par un groupe carboxyle produite en faisant réagir au moins une résine de polyester fonctionnalisée par un groupe hydroxyle avec des acides dicarboxyliques cycliques, aliphatiques et/ou aromatiques et/ou leurs anhydrides,
dans laquelle les acides dicarboxyliques cycliques, aliphatiques et/ou aromatiques et/ou leurs anhydrides réagissant avec l'au moins une résine de polyester fonctionnalisée par un groupe hydroxyle pour le composant B) sont les anhydrides d'acide hexahydrophtalique, l'acide méthylhexahydrophtalique, l'acide tétrahydrophtalique, l'acide méthyltétrahydrophtalique et/ou l'acide succinique,
et
C) de 0,01 à 50 % en poids d'au moins un additif de revêtement, un pigment et/ou une charge,
dans laquelle le % en poids est basé sur le poids total de la composition de revêtement en poudre.

2. Composition selon la revendication 1, dans laquelle la résine de (méth)acrylique fonctionnalisée par un groupe glycidyle A) est produite à partir de (méth)acrylate de glycidyle, d'esters d'acide (méth)acrylique et de dérivés de styrène.

3. Composition selon la revendication 1 et la revendication 2, dans laquelle la résine de (méth)acrylique fonctionnalisée par un groupe glycidyle A) a un poids équivalent d'époxyde (EEW) dans une plage de 250 à 500 et une viscosité de fusion à 140 °C dans une plage de 10 000 à 120 000 mPas.

4. Composition selon les revendications 1 à 3, dans laquelle la résine de polyester fonctionnalisée par un groupe hydroxyle pour le composant B) est produite en faisant réagir des acides dicarboxyliques et/ou leurs anhydrides avec des polyols en excès.

5. Composition selon la revendication 4, dans laquelle les polyols sont le 1,6-hexanediol, le néopentylglycol (NPG), le 1,3-propanediol, le cyclohexanediméthanol (CHDM) isomère et/ou le triméthylolpropane (TMP).

6. Composition selon la revendication 4, dans laquelle les acides dicarboxyliques ou leurs anhydrides sont l'acide phtalique, l'acide téréphtalique, l'acide isophtalique, l'acide cyclohexanedicarboxylique, l'acide adipique et/ou leurs anhydrides.

7. Procédé pour la préparation de la composition de revêtement en poudre selon les revendications 1 à 6, dans lequel la résine de polyester fonctionnalisée par un groupe carboxyle B) est produite en faisant réagir au moins une résine de polyester fonctionnalisée par un groupe hydroxyle avec des anhydrides d'acides dicarboxyliques cycliques, aliphatiques et/ou aromatiques.

8. Procédé de revêtement d'un substrat par application d'une composition de revêtement en poudre selon les revendications 1 à 6 sur le substrat et durcissement de la composition de revêtement en poudre appliquée par exposition à une énergie thermique à des températures de 120 à 150 °C.

9. Substrat revêtu par une composition de revêtement en poudre selon les revendications 1 à 6.
